# EUROPEAN PATENT SPECIFICATION

(11) **EP 0 430 410 B1**
(45) Date of publication and mention of the grant of the patent: **15.09.1993**
(21) Application number: 90310982.5
(22) Date of filing: 08.10.1990
(51) Int. Cl.: E04H 12/18

(54) **A power actuable, openable and closable, lockable and unlockable, hinge assembly**
Motorisiertes Scharnier, zu öffnen, zu verschliessen, zu verriegeln und zu entriegeln
Charnière motorisée, ouvrable, fermable, blocable et déblocable

(30) Priority: 23.11.1989 GB 8926503
(43) Date of publication of application: 05.06.1991
(73) Proprietor: BRITISH AEROSPACE PUBLIC LIMITED COMPANY, Farnborough, Hants. GU14 6YU (GB)
(72) Inventor: Humphries, Martin Edward, Bristol, BS12 7QW (GB); Hyam, Matthew, Bristol, BS12 7QW (GB)
(74) Representative: Rooney, Paul Blaise

(56) References cited:
- FR-A- 2 566 588
- US-A- 2 979 608
- US-A- 3 295 699
- US-A- 3 417 523

## Description

This invention relates to a power actuable, openable and closable, lockable and unlockable, hinge assembly having two pivotally interconnected hinge members.

Hinge assemblies are known having two pivotally interconnected hinge members but such assemblies are conventionally openable by a spring acting between the members to bias them apart into an open position. These conventional assemblies are normally locked in the open position by means of a pin which drops into apertures on the members in the open position. With such known assemblies no provision is made for unlocking or closing the assembly and this presents a serious drawback for some applications such as where it is necessary to open and close a hinge assembly at a position or location remote from the operator.

FR-A-2 566 588 discloses a power actuable openable and closable, lockable and unlockable, hinge assembly having pivotally interconnected hinge members and power driven latch means for locking and unlocking the members. The latch means which includes a cable actuated spring loaded plunger for releasable enagement with a retaining hook is relatively complicated and subject to wear with resulting inaccuracy of operation.

For use on a deployable articulated mast or boom a hinge assembly requires to be strong and to afford the possibility of opening and closing by powered actuation so that the mast or boom can be collapsed into individual sections and extended as desired. Such a hinge assembly should be strong enough to withstand side forces on the mast or boom when it is in the deployed extended position and should be capable of being lockable in the open position corresponding to extension of the mast or boom and unlockable when it is desired to close the hinge assembly and thereby collapse the mast or boom.

According to the present invention there is provided a power actuable, openable and closable, lockable and unlockable, hinge assembly having pivot means, two hinge members pivotally interconnectable by the pivot means for relative angular movement between an open position in which the hinge members extend substantially co-axially in end-to-end relationship and a closed position in which one hinged member is angularly displaced, with respect to the other hinge member, about the pivot means out of the end-to-end relationship, lockable and unlockable latch means having a first moveable portion carried on one of the hinge members and a second co-operating moveable portion carried on the other of the hinge members, and power drivable actuator means selectively operable to open and lock the hinge members together by pivoting one of the hinge members from the closed position about the pivot means into the substantially co-axial end-to-end relationship of the open position and then causing the latch means portions to engage and lock the hinge members together, and to unlock and close the hinge members by unlocking and disengaging the latch means portions of the locked end-to-end hinge members and then to pivot one of the hinge members about the pivot means angularly with respect to the other of the hinge members out of the end-to-end relationship into the closed position, characterised in that the actuator means includes a rotable drive shaft, the first movable portion of the latch means is an acme externally screw threaded nose portion fixed to and projecting from the free end of the actuator means drive shaft for rotation therewith and wherein the second movable portion of the latch means is a complementary acme internally screw threaded nut non-rotatably but axially movably mounted on the outer hinge member.

Conveniently the pivot means includes a pivot pin and the hinge members are each of substantially elongated channel form and substantially U shaped in cross-section with a base web and two spaced apart side webs, which side webs each have an apertured pivot lug at or near the outermost comer thereof remote from the base web for receiving the pivot pin, and with the hinge members being dimensioned such that the base web of one or inner hinge member is smaller in width than the base web of the other or outer hinge member so that the inner hinge member fits within the outer hinge member at the pivot lugs with the pivot pin passing through the aligned lug apertures.

Preferably the rotatable drive shaft is rotatably carried in the inner hinge member to extend substantially transversely to the longitudinal axis of the pivot pin, a screw threaded worm fixedly carried on the drive shaft adjacent a free end thereof which is adjacent the open pivot pin end of the inner hinge member, for rotation with the drive shaft, a screw threaded worm wheel in mesh with the worm, which worm wheel is rotationally mounted on the pivot pin, and is provided with two, spaced apart, drive pins projecting from a side thereof substantially parallel to the rotational axis of the worm wheel for engagement with two corresponding arcuate slots in a drive collar fixedly attached to the pivot pin to provide a drive coupling between the worm wheel and pivot pin with a limited degree of lost motion, rotation of the drive shaft in one or other direction causing movement of the outer hinge member relative to the inner hinge member between the open and closed position.

Conveniently the nut is axially movably mounted in one end of a sleeve to which it is connected for axial but not rotative relative movement by means of radially projecting pegs on the nut periphery sliding in corresponding axially extending slots through the wall of the sleeve, with the other end of the sleeve being axially slidably mounted on a spigot fixedly attached to the outer hinge member.

Preferably a first spring means is provided between the spigot and the sleeve resiliently to bias the sleeve axially away from the spigot, and wherein a second spring means is provided between the other end of the sleeve and the end face of the nut innermost in the sleeve to bias the nut axially away from the sleeve to the maximum extent permitted by the co-operating nut pegs and sleeve slots, with the leading end of the nose portion on the actuator means drive shaft being shaped and dimensioned so as contact the leading end of the nut during angular pivoting movement of the outer hinge member, displace the nut rearwardly against the biassing force of the second spring means until the nose portion and nut are in axial alignment whereupon the second spring means biassing force re-urges the nut into contact with the nose portion for screw threaded engagement therewith on continued rotation of the actuator means drive shaft.

For a better understanding of the present invention, and to show how the same may be carried into effect, reference will now be made, by way of example, to the accompanying drawings, in which;

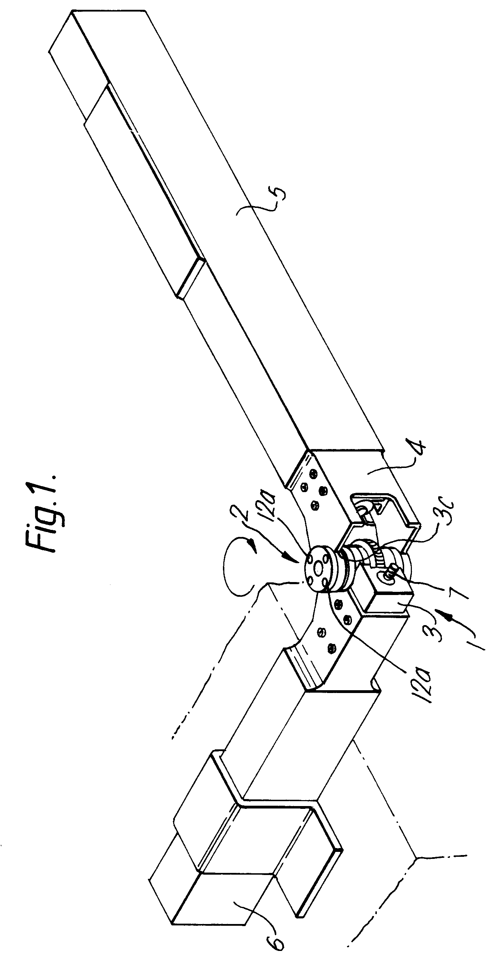

Figure 1 is a perspective diagrammatic view of a hinge assembly according to a first embodiment of the invention shown in operative association with two sections of a collapsible and extensible mat or boom with the hinge assembly shown in a half open/half closed position,
Figure 2 is a plan view to a larger scale of the hinge assembly of Figure 1 shown substantially without the boom or mat sections of Figure 1,
Figure 3 is a view similar to that of Figure 2 but showing the hinge assembly thereof in a fully closed position in conjunction with parts of the boom or mast sections,
Figure 4 is an end view of Figure 3 taken in the direction of the arrow A,
Figure 5 is a cross sectional view taken on the line B-B of Figure 3,
Figure 6 is a longitudinal cross sectional view taken on the line C-C of Figure 5 showing the hinge assembly in an open position, with Figure 5 also corresponding to a transverse cross sectional view taken on line D-D of Figure 6,
Figure 7 is a perspective diagrammatic view, similar to that of Figure 1, of the hinge assembly of Figure 1 in a half open/half closed position, showing complementary finger and recessed means,
Figure 8 is a perspective diagrammatic view of the hinge assembly of Figure 7 shown in the open position with the finger and recessed means interengaged,
Figure 9 shows the hinge assembly and mast or boom sections of Figure 3 in plan view in the fully closed position at the start of the opening movement of the hinge assembly,
Figure 10 is a plan view similar to that of Figure 9 but showing the hinge assembly rotated through an angle of 163° with a nut on one hinge member of the assembly contacting a nose portion on the other hinge member,
Figure 11 is a view similar to that of Figure 10 but showing the hinge assembly after rotation through 173°,
Figure 12 is a view similar to that of Figure 11 but showing the hinge assembly after rotation through 178°,
Figure 13 is a view similar to that of Figure 12 but showing the hinge assembly after rotation through 180° in the fully open position,
Figure 14 is a view similar to that of Figure 13 showing the nut and now portion fully engaged in the fully open position, and
Figure 15 shows the hinge assembly of Figures 9 to 14 in the fully open position at the start of movement into the closed position.

A power actuable, openable and closable, lockable and unlockable, hinge assembly as generally indicated at 1 in the accompanying drawings is intended primarily for use to interconnect two sections of a collapsible and extensible boom or mast. However although described in the following in terms of its use with such a boom or mast it is to be understood that the hinge assembly of the invention can be used for any other purposes as desired.

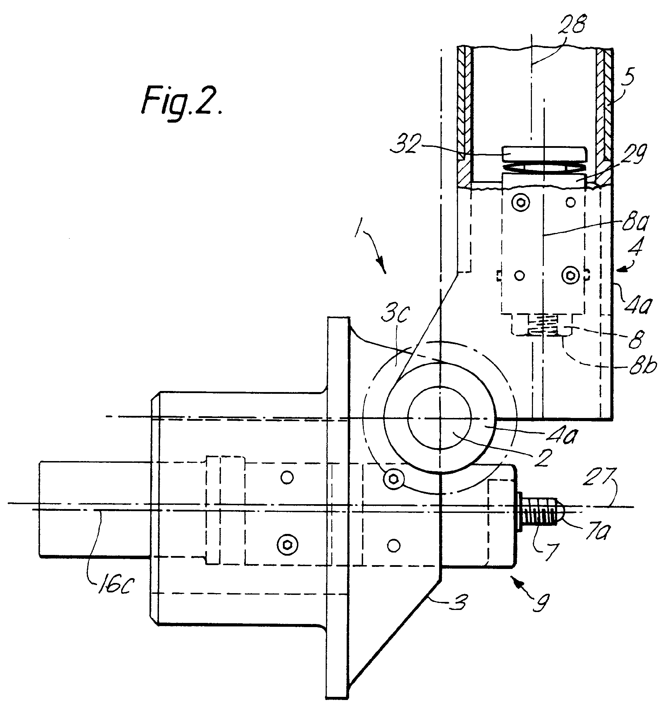

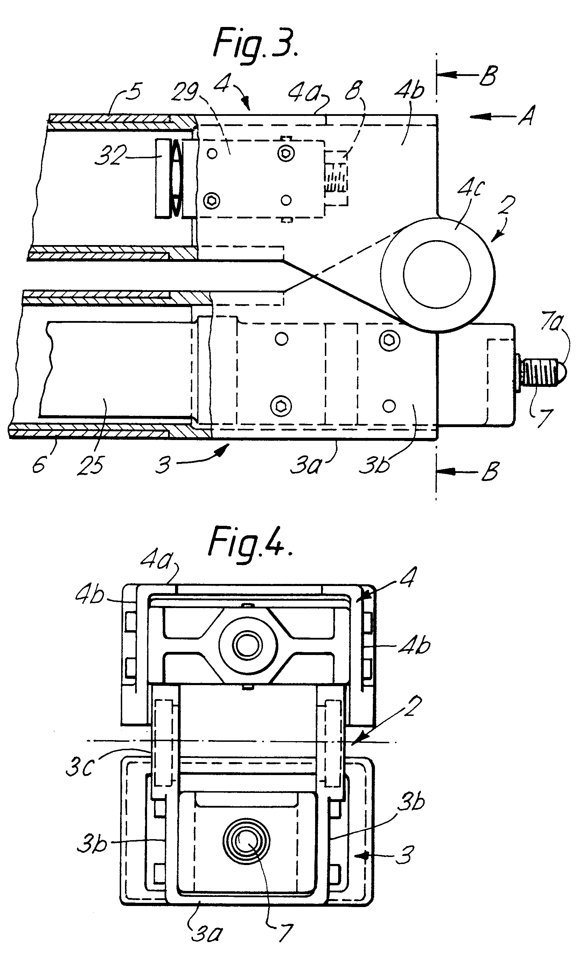

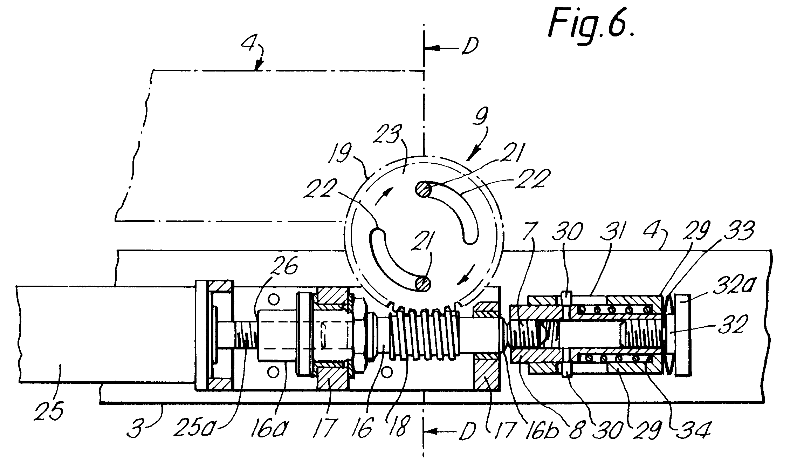

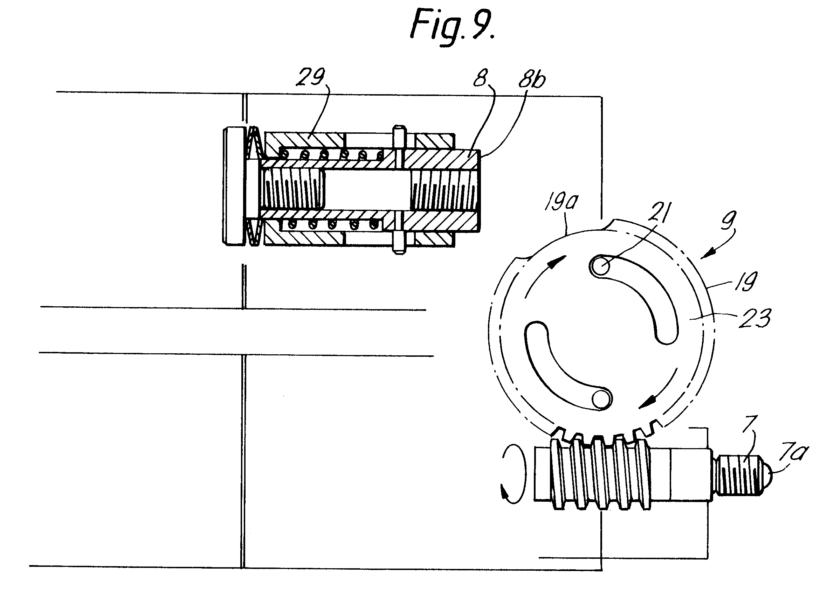

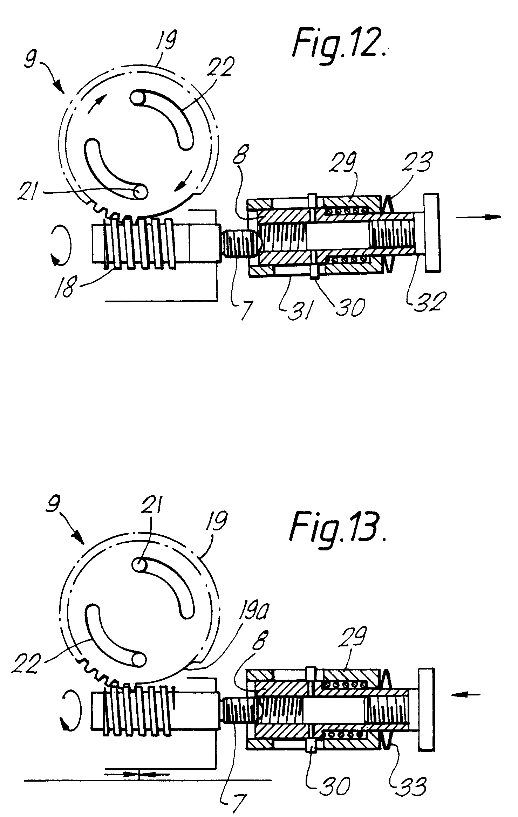

The hinge assembly 1 has pivot means 2 and two hinge members, namely an inner hinge member 3 and an outer hinge member 4 pivotally interconnected by the pivot means 2 for relative angular movement between an open position a shown in solid lines in Figure 6 and in Figures 8, 13 14 and 15, in which the hinge members 3 and 4 extend substantially co-axially in end-to-end relationship and a closed position shown in dotted lines in Figure 6 and in Figures 3, 4 and 9, in which the outer hinge member 4 is angularly displaced, with respect to the inner hinge member 3, about the pivot means 2 out of the end-to-end relationship. As shown in Figures 3, 4, 6 and 9 the open position is pivoted through 180° from the closed position for the purpose of stowing in side by side relationship sections 5 and 6 of a mast or boom assembly, but for alternative uses of the hinge assembly 1 the open position could be at any angular relationship to the closed position such as the 90° position shown in Figure 2.

The hinge assembly 1 of the present invention also includes a lockable and unlockable latch means having a first movable portion 7 carried on the inner hinge member 3 and a second co-operating moveable portion 8 carried on the outer hinge member 4.

Also forming part of the hinge assembly 1 is power driveable actuator means generally indicated at 9 selectively operable to open and lock the hinge members 3 and 4 together by pivoting one of the hinge members, preferably the outer hinge member 4, from the closed position about the pivot means 2 into the substantially coaxial end-to-end relationship of the open position and then causing the latch means portion 7 and 8 to engage and lock the hinge members 3 and 4 together as will be later described in more detail in respect of Figures 9 to 14. The actuator means 9 is also operable selectively to unlock and close the hinge members 3 and 4 by unlocking an disengaging the latch means portions 7 and 8 of the locked end-to-end hinge members 3 and 4 and then to pivot one of the hinge members, preferably the outer hinge member 4, about the pivot means 2 angularly with respect to the inner hinge member 3 out of the end-to-end relationship into the closed position.

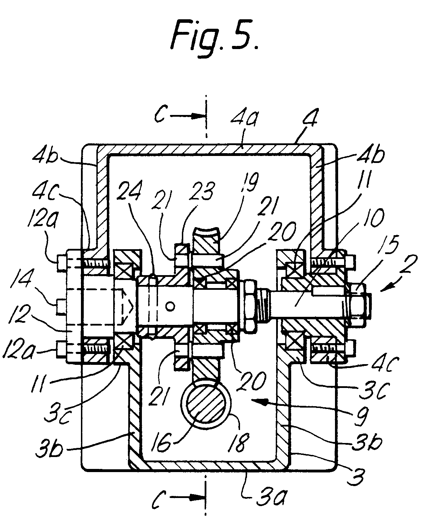

The pivot means 2 includes a pivot pin 10 supported by pre-loaded angular contact bearings 11 in the inner hinge member 3. The hinge members 3 and 4 are each of substantially elongated channel form and substantially U shaped in cross section with a base web 3a, 4a and two spaced apart side webs 3b and 4b. The side webs 3b and 4b each have an apertured pivot lug 3c and 4c at or near the outermost corner thereof as can be seen in Figure2 remote from the base web 3a, 4a for receiving the pivot pin 10. As can be seen in Figure 5 the hinge members 3 and 4 are dimensioned such that the base web 3a of the inner hinge member 3 is smaller in width than the base web 4a of the outer hinge member 4 so that the inner hinge member 3 fits within the outer hinge member 4 at the pivot lugs 3c and 4c with the pivot pin 10 passing through the aligned lug apertures.

The outer hinge member 4 is fixedly attached to the hinge pin 10 to rotate therewith preferably by means of an end plate 12 and fixing studs 12a interconnecting the lug 4c and the pivot pin 10 via an intermediate fixing stud 14. The other end of the pivot pin 10 may be connected in any convenient manner such a by means of a screw thread thereon and a nut 15 to a distance piece 15 secured to or carried by the other lug 4c.

As can be seen from Figure 5 the inner hinge member 3 is rotationally supported by the pre-loaded angular contact bearings 11 on the pivot pin 10 for pivotal rotational movement relative thereto.

As can be best seen from Figures 5 and 6 the actuator means 9 includes a rotatable drive shaft 16 rotatably carried at bearings 17 in the inner hinge member 3 to extend substantially transversely to the longitudinal axis of the pivot pin 10. Also forming part of the actuator means 9 is a screw threaded worm 18 fixedly carried on the drive shaft 16 adjacent a free end thereof which is adjacent the open pivot pin end of the inner hinge member 3 for rotation with the drive shaft 16. Preferably the worm 18 is a single start worm.

Also forming part of the actuator means 9 is a screw threaded worm wheel 19 which may be peripherally interrupted as at 19a for purposes as will later be described. The worm wheel 19 is in mesh with the worm 18 and is rotationally mounted on the pivot pin 10 via bearings 20. The worm wheel 19 has two, spaced apart, drive pins 21 projecting from a side thereof substantially parallel to the rotational axis of the worm wheel 19 for engagement with two corresponding arcuate slots 22 in a drive collar 23 fixedly attached such a by means of a transverse pin 24, to the pivot pin 10 to provide a drive coupling between the worm wheel 19 and the pivot pin 10 with a limited degree of lost motion, preferably of the order of 90°. Rotation of the drive shaft 16 in one or other direction will therefore cause movement of the outer hinge member 4 relative to the inner hinge member 3 between the open and closed positions.

The actuator means 9 includes a drive motor connected to the end of the drive shaft 16 remote from the free end. This drive motor preferably is an electric motor 25 housed in an attached to the inner hinge member 3 which drives the shaft 16 by means of a motor output shaft 25a which is externally splined and engaged in an internally splined bore 26 in the adjacent end 16a of the drive shaft 16. This form of construction allows for a degree of end float between the motor 25 and shaft 16 if necessary. Although the motor 25 has been shown as integral with the hinge assembly hinge member 3 it is alternatively possible to provide a drive motor externally of the assembly so that a plurality of hinge assemblies can be actuated by means of a single drive motor in communication with the individual drive assemblies in a multi section boom or mast via a control drive cable passing through the sections.

The first moveable portion 7 of the latch means is an acme externally screw threaded nose portion fixed to and projecting from the free end 16b of the drive shaft 16. Conveniently the nose portion may be formed integrally with the drive shaft 16 by machining therefrom. However the shaft 16 and nose portion 7 are formed they are formed so as to rotate together. The second moveable portion 8 of the latch means is a complementary acme internally screw threaded nut non-rotatably but axially movably mounted on the outer hinge member 4. The nut 8 is axially moveable along its longitudinal axis, which, in the open position of the assembly 1, is coaxial with the longitudinal axis of the drive shaft 16 and acme nose portion 7. As can be seen from the drawings, particularly from Figure 2 thereof, the longitudinal axis 16c of the drive shaft 16 preferably is not coaxial with the longitudinal axis 27 of the hinge member 3 but preferably is slightly spaced from the longitudinal axis 27 on the side thereof remote from the pivot pin 10. Similarly the longitudinal axis 8a of the nut 8 is not coincident with the longitudinal axis 28 of the hinge member 4 but preferably is spaced slightly therefrom on the side thereof remote from the pivot pin 10. This offset location of the axis is to improve the latching locking and unlocking action.

The nut 8 is axially movably mounted in one end of a sleeve 29 to which it is connected for axial but not rotative relative movement by means of radially projecting pegs 30, preferably two such pegs, on the nut peripherally sliding in corresponding axially extending slots 31 through the wall of the sleeve 29. The other end of the sleeve 29 is axially slidably mounted on a spigot 32 fixedly attached to the outer hinge member 4.

As can be seen from Figure 6 in particular a first spring means in the form of a disc spring 33 is provided between a shoulder portion 32a of the spigot 32 and the sleeve end face 29a. The disc spring 33 acts as a preload compliance spring. A second spring means in the form of a light compression spring 34 is provided within the sleeve between the facing end of the nut 8 and an internal shoulder provided on the sleeve at the end 29a thereof. This spring 34 acts to bias the nut 8 axially away from the sleeve to the maximum extent permitted by the co-operating nut pegs 30 and sleeve slots 31.

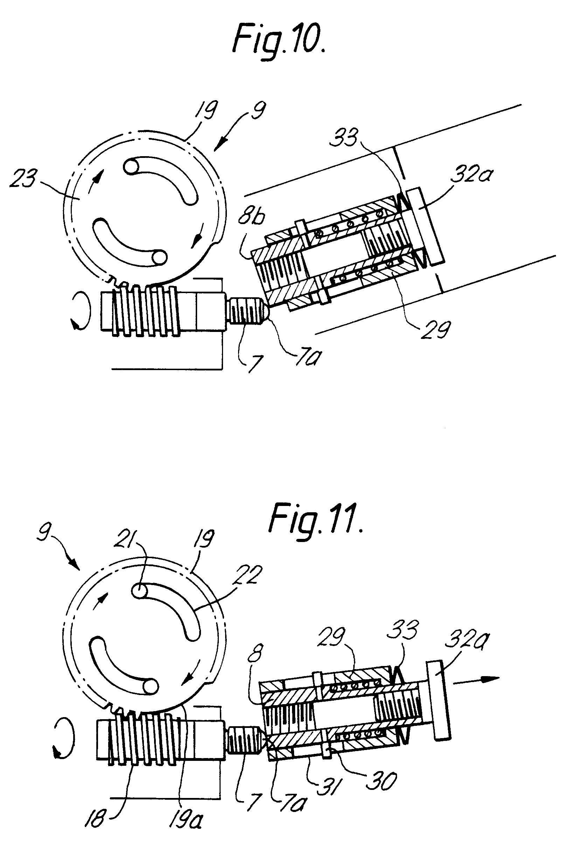

The leading end 7a of the nose portion 7 is shaped and dimensioned, preferably by being of part spherical shape, so as to contact the leading end 8b of the nut 8, as illustrated in Figure 10, to contact the leading end 8b of the nut 8 during angular pivoting movement of the outer hinge member 4. This contact is such that the rounded shape of the leading end 7a of the nose portion 7 acts as a cam face which displaces the nut 8 rearwardly against the biasing force of the spring 34 until the nose portion 7 and nut 8 are in axial alignment whereupon the spring 34 re-urges the nut 8 into contact with the nose portion 7 so that on continued rotation of the actuator means drive shaft the screw thread of the nose portion 7 engages the screw thread in the nut 8 drawing the nut 8 onto the nose portion 7.

Complementary finger and recessed means are provided on the two hinge members 3 and 4 with the finger means projecting substantially parallel to the longitudinal axes of the two hinge members. The finger means may be provided on one hinge member and the recess means on the other hinge member or some of the finger means may be provided on one hinge member and some on the other hinge member with the recess means being distributed accordingly on the two hinge members. The purpose of the finger and recess means is that the finger means engage in the appropriate complementary recesses in the open position of the hinge assembly 1 to improve the rigidity and transverse load caring capability of the assembly in the open position.

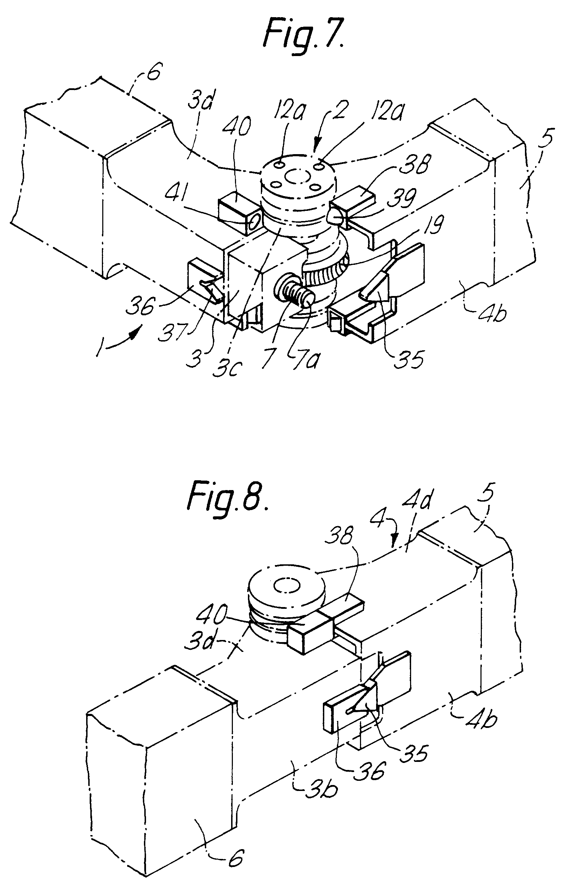

As shown in Figures 7 and 8 the complementary finger and recessed means conveniently take the form of a tapered, substantially triangular in plan finger 35 mounted on the side web 4b of the outer hinge member 4 to project proud of the end thereof towards the inner hinge member 3, and a recessed member 36 having a complementary substantially triangular or V shaped recess 37 for receiving the triangular leading end of the finger 35, as shown in Figure 8. The member 36 is mounted on the inner hinge member side web 3b with the mouth of the recess 37 opening towards the outer hinge member 4. The triangular form of the finger and recessed means allows movement of the hinge members 3 and 4 transversely to the longitudinal axis through the members 3 and 4, that is at right angles to the side webs 3b and 4b.

Also as shown in Figures 7 and 8 at least one further pair of finger and recessed means may be provided. This further pair preferably takes the form of a finger 38 having a substantially conical head 39, which finger is mounted on the hinge member 4 on a top web 4d thereof to project proud of the end thereof towards the inner member 3. A recessed member 40 having a complementary substantially conical shaped recess for receiving the conical head 39 is mounted on the hinge member 3 on a top web 3d thereof with the mouth of the recess 41 opening towards the outer hinge member 4. Interengagement between the conical head 39 and conical recess 41 provides absolute alignment for the hinge members 3 and 4.

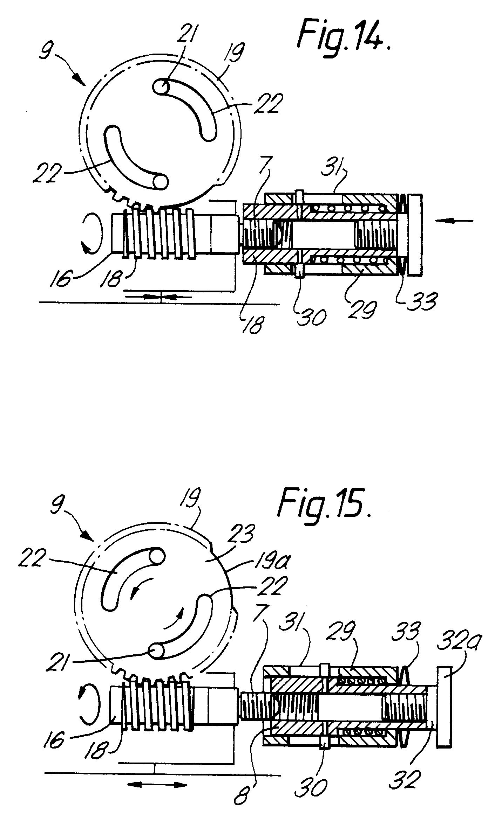

The operation of a hinge assembly 1 according to the invention will now be described with reference to Figures 9 to 15 of the accompanying drawings. With the two hinge members 3 and 4 in the closed position a shown in Figure 9 switching on the drive motor 25 rotates the worm wheel 19 through 90° via the worm 18. The hinge member 4 does not move during this initial rotation of the worm wheel 19 which is allowed by movement of the drive pins 21 from one end of the arcuate slots 22 in the drive collar 23 such a shown in Figure 15, to the position shown in Figure 7. The drive collar 23, pins 21 and slots 22 thus act as a lost motion coupling until the worm wheel 19 has rotated in a clockwise direction sufficiently for the drive pins 21 to contact the ends of the slots 22 as shown in Figure 9. For continued clockwise rotation of the worm wheel 19 via the motor 25 and worm 18 the pins 21 engage the ends of the slots 22 and transmit drive via the drive collar 23 directly to the hinge member 4 which then pivots or rotates angularly through motion transmitted through the drive column 23 to the pivot pin 10. After rotation of about 163° the leading end of 8b of the nut 8 contacts the rotating leading end 7a of the nose portion 7 as shown in Figure 10 and the nut 7 begins to move axially rearwardly towards the spigot 32 against the action of the return spring 34, with disc spring 33 being lightly compressed between the sleeve 29 and spigot 32.

The hinge member 4 continues to open as shown in Figure 11 and the nut 8 is further displaced axially into the sleeve 29 against the spring 34. Figure 11 represents a rotation or pivotal movement of the hinge member 4 through about 173°. Maximum compression of the spring 34 is after about 178° rotation as shown in Figure 12. At full rotation through 180° as shown in Figure 13 the screw thread on the nose portion 7 starts to engage the internal screw thread on the nut 8 and the worm 18 disengages from drive with the worm wheel 19 by running into the interrupted region 19a thereof a can be seen from Figure 13.

The drive motor 25 continues to run and the worm 18 and nose portion 17 continue to rotate so that the nut 8 is drawn onto the nose portion 7 with the assistance of the compression spring 34. By virtue of the attachment of the nut 8 to the spigot 32, preferably by means of the pegs 30 being attached directly to the spigot 32 and passing through bores through the nut 8 rather than being attached directly to the nut 8, the spigot 32 is pulled axially forward with the nut 8 until the disc spring 33 is clamped tight between the spigot shoulder 32a and the sleeve end face 29a as shown in Figure 14. This provides the desired pre-load which can be used to initiate a switch off of the drive motor 25, preferably by means of a microswitch on the spring 33. The degree of preload can be varied by appropriate choice of the configuration and/or number of elements in the disc spring 33. Alternatively, and not shown, the drive motor 25 could be a stepper motor programmed to rotate the nut 8 by a predetermined number of steps to achieve the correct degree of pre-load on the spring 33. Thus Figure 14 represents the hinge assembly 1 in the fully locked open position. Figure 15 shows the assembly at the start of re-closing of the assembly in which rotation of the motor 25 in the opposite direction rotates the wheel 19 through 90° without any drive being transmitted to the hinge member 4. This results from movement of the drive pins 21 back to the opposite ends of the slots 22 by anti-clockwise rotation of the wheel 19 and drive collar 23 as shown in Figure 15. This ensures that the screw thread on the nose portion 7 is disengaged from the screw thread on the nut 8 before drive is transferred to the hinge member 4. The compression of the spring 34 during release of the nut 8 imparts torque to the assembly to bring the worm 18 and worm wheel 19 back into engagement.

With the hinge assembly of the invention there is no load on the worm wheel 19 in the locked, closed position as shown in Figure 14. In this position the main load is carried by the drive shaft 16 and the abutting faces of the hinge members provided with the inter engaging finger and recess means. If desired the worm wheel 19 could be slotted to provide for a longitudinal locking movement.

## Claims

1. A power actuable openable and closable, lockable and unlockable, hinge assembly having pivot means (2), two hinge members (3,4) pivotally interconnectable by the pivot means (2) for relative angular movement between an open position in which the hinge members (3,4) extend substantially co-axially in end-to-end relationship and a closed position in which one hinged member (4) is angularly displaced, with respect to the other hinge member (3), about the pivot means (2) out of the end-to-end relationship, lockable and unlockable latch means having a first moveable portion (7) carried on one of the hinge members (3) and a second co-operating moveable portion (8) carried on the other of the hinge members (4), and power drivable actuator means (9) selectively operable to open and lock the hinge members (3,4) together by pivoting one of the hinge members (4) from the closed position about the pivot means (2) into the substantially co-axial end-to-end relationship of the open position and then causing the latch means portions (7,8) to engage and lock the hinge members (3,4) together, and to unlock and close the hinge members (3,4) by unlocking and disengaging the latch means portions (7,8) of the locked end-to-end hinge members (3,4) and then to pivot one of the hinge members (3,4) about the pivot means (2) angularly with respect to the other of the hinge members (3,4) out of the end-to-end relationship into the closed position, characterised in that the actuator means (9) includes a rotable drive shaft (16), the first moveable portion (7) of the latch means is an acme externally screw threaded nose portion (7) fixed to and projecting from the free end (16b) of the actuator means drive shaft (16) for rotation therewith and wherein the second movable portion (8) of the latch means is a complementary acme internally screw threaded nut (8) non-rotatably but axially movably mounted on the outer hinge member (4).

2. An assembly according to claim 1 wherein, the pivot means (2) includes a pivot pin (10) and wherein the hinge members (3,4) are each of substantially elongated channel form and substantially U shaped in cross-section with a base web (3a,4) and two spaced apart side webs (3b,4b), which side webs (3b,4b) each have an apertured pivot lug (3c,4c) at or near the outermost comer thereof remote from the base web (3a,4a) for receiving the pivot pin (10), and with the hinge members (3,4) being dimensioned such that the base web (3a) of one or inner hinge member (3) is smaller in width than the base web (4a) of the other or outer hinge member (4) so that the inner hinge member (3) fits within the outer hinge member (4) at the pivot lugs (3c,4c) with the pivot pin (10) passing through the aligned lug apertures.

3. An assembly according to claim 2, wherein the outer hinge member (4) is fixedly attached to the hinge pin (10) to rotate therewith.

4. An assembly according to claim 2 or claim 3, wherein the inner hinge member (3) is rotationally supported by pre-loaded angular contact bearings (11) on the pivot pin (10) for pivotal rotational movement relative thereto.

5. An assembly according to any one of claims 2 to 4, wherein the rotatable drive shaft (16) is rotatably carried in the inner hinge member (3) to extend substantially transversely to the longitudinal axis of the pivot pin (10), a screw threaded worm (18) fixedly carried on the drive shaft (16) adjacent a free end thereof which is adjacent the open pivot pin end of the inner hinge member (3), for rotation with the drive shaft (16), a screw threaded worm wheel (19) in mesh with the worm (18), which worm wheel (19) is rotationally mounted on the pivot pin (10), and is provided with two, spaced apart, drive pins (21) projecting from a side thereof substantially parallel to the rotational axis of the worm wheel (19) for engagement with two corresponding arcuate slots (22) in a drive collar (23) fixedly attached to the pivot pin (10) to provide a drive coupling between the worm wheel (19) and pivot pin (10) with a limited degree of lost motion, rotation of the drive shaft (19) in one or other direction causing movement of the outer hinge member (4) relative to the inner hinge member (3) between the open and closed position.

6. An assembly according to claim 5, wherein the limited degree of lost motion is substantially 90°.

7. An assembly according to claim 5 or claim 6, wherein the worm (18) is a single start worm.

8. An assembly according to any one of claims 5 to 7, wherein the actuator means includes a drive motor connected to the end of the drive shaft (16) remote from the free end.

9. An assembly according to claim 8, wherein the drive motor is an electric motor (25) housed in and attached to the inner hinge member (3).

10. An assembly according to any one of claims 1 to 9, wherein the nut (8) is axially movable along its longitudinal axis, which, in the open position of the assembly (1), is coaxial with the longitudinal axis of the drive shaft (16) and acme nose portion (7).

11. An assembly according to claim 10, wherein the nut is axially movably mounted in one end of a sleeve (29) to which it is connected for axial but not rotative relative movement by means of radially projecting pegs (30) on the nut periphery sliding in corresponding axially extending slots (31) through the wall of the sleeve (29), with the other end of the sleeve being axially slidably mounted on a spigot (32) fixedly attached to the outer hinge member (4).

12. An assembly according to claim 11, wherein a first spring means is provided between the spigot (32) and the sleeve (29) resiliently to bias the sleeve (29) axially away from the spigot (32), and wherein a second spring means is provided between the other end of the sleeve (29) and the end face of the nut (8) innermost in the sleeve (29) to bias the nut (8) axially away from the sleeve (29) to the maximum extent permitted by the co-operating nut pegs (30) and sleeve slots (31), with the leading end (7a) of the nose portion (7) on the actuator means drive shaft being shaped and dimensioned so as to contact the leading end (8b) of the nut (8) during angular pivoting movement of the outer hinge member (4), displace the nut (8) rearwardly against the biasing force of the second spring means until the nose portion (7) and nut (8) are in axial alignment whereupon the second spring means biasing force re-urges the nut (8) into contact with the nose portion (7) for screw threaded engagement therewith on continued rotation of the actuator means drive shaft.

13. An assembly according to any one of claims 1 to 12, including complementary finger and recess means provided on the two hinge members (3,4) for engagement in the open position of the assembly (1) for improving the rigidity and transverse load carrying capability of the assembly in the open position.

14. An assembly according to claim 13, wherein the complementary finger and recess means includes at least one tapered, substantially triangular in plan finger (35) mounted on one of said hinge members (4) and a recessed member (36), having a complementary substantially triangular or V shaped recess (37), mounted on the other of said hinge members (3).

15. An assembly according to claim 13 or claim 14, wherein the complementary finger and recess means includes at least one substantially conically headed finger (38) mounted on one of said hinge members (4) and a recessed member (40), having a complementary substantially conical shaped recess, mounted on the other of said hinge members (3).

16. A collapsible boom or mast having a plurality of elongated sections and at least one hinge assembly (1) according to any one of claims 1 to 15, with the or each assembly (1) interconnecting two adjoining sections.

## Patentansprüche

1. Motorisiertes Scharnier, welches zu öffnen, zu verschließen, zu verriegeln und zu entriegeln ist, mit einer Schwenkvorrichtung (2), mit zwei Scharniergliedern (3, 4), die durch die Schwenkvorrichtung (2) schwenkbar verbunden sind, um eine relative Winkelbewegung zwischen einer Öffnungsstellung, in der die Scharnierglieder (3, 4) im wesentlichen koaxial verlaufend stirnseitig aneinanderliegend angeordnet sind, und einer Schließstellung durchführen zu können, in der das eine Scharnierglied (4) im Winkel gegenüber dem anderen Scharnierglied (3) durch die Schwenkvorrichtung (2) versetzt ist und aus der stirnseitigen Streckstellung herausbewegt wurde, mit verriegelbaren und entriegelbaren Mitteln, die einen ersten von dem einen Scharnierglied (3) getragenen beweglichen Teil (7) und einen zweiten hiermit zusammenwirkenden beweglichen Teil (8) an dem anderen Scharnierglied (4) aufweisen, und mit einem Kraftantrieb (9), der selektiv betätigbar ist, um die Scharnierglieder (3, 4) zusammen zu öffnen und zu verriegeln, indem das eine Scharnierglied (4) aus der Schließstellung um die Schwenkvorrichtung (2) in die im wesentlichen koaxiale stirnseitige Streckstellung der Öffnungsstellung verschwenkt wird und danach die Verriegelungsteile (7, 8) in Eingriff gebracht werden, um an den Scharniergliedern (3, 4) anzugreifen und diese miteinander zu verriegeln, und um die Scharnierglieder (3, 4) zu entriegeln und zu schließen, indem die Verriegelungsteile (7, 8) der stirnseitig ausgerichteten Scharnierglieder (3, 4) entriegelt werden und dann eines der Scharnierglieder (3, 4) um die Schwenkvorrichtung (2) im Winkel gegenüber dem anderen Scharnierglied (3, 4) versetzt und aus der stirnseitigen Streckstellung in die Schließstellung überführt wird, dadurch gekennzeichnet, daß der Kraftantrieb (9) eine drehbare Antriebswelle (16) aufweist und der erste bewegliche Teil (7) einen Spindelteil mit einem Trapez-Außengewinde aufweist, der vom freien Ende (16b) der Antriebswelle (16) vorsteht und an diesem festgelegt ist, um sich damit zu drehen, und daß der zweite bewegliche Teil (8) der Verriegelungsvorrichtung von einer mit einem komplementären Trapez-Innengewinde versehenen Mutter (8) gebildet ist, die drehfest, aber axial beweglich am äußeren Scharnierglied (4) montiert ist.

2. Scharnier nach Anspruch 1, bei welchem die Schwenkvorrichtung (2) einen Schwenkzapfen (10) aufweist und die Scharnierglieder (3, 4) jeweils aus langgestreckten Kanalprofilen mit im wesentlichen U-förmigem Querschnitt bestehen, welche einen Basissteg (3a, 4a) und zwei im Abstand zueinander liegende Seitenstege (3b, 4b) aufweisen, wobei die Seitenstege (3b, 4b) jeweils einen mit einer Bohrung versehenen Schwenkansatz (3c, 4c) in der Nähe der äußersten Ecke entfernt vom Basissteg (3a, 4a) aufweisen, um den Schwenkzapfen (10) aufzunehmen, und wobei die Scharnierglieder (3, 4) so dimensioniert sind, daß der Basissteg (3a) des einen oder inneren Scharniergliedes (3) in der Breite kleiner ist als der Basissteg (4a) des anderen oder äußeren Scharniergliedes (4), so daß das innere Scharnierglied (3) in das äußere Scharnierglied (4) an den Schwenkvorsprüngen (3c, 4c) einpaßt, wobei der Schwenkzapfen (10) durch die aufeinander ausgerichteten Löcher der Ansätze hindurchtritt.

3. Scharnier nach Anspruch 2, bei welchem das äußere Scharnierglied (4) fest am Schwenkzapfen (10) angeordnet ist, um sich mit diesem zu drehen.

4. Scharnier nach den Ansprüchen 2 oder 3, bei welchem das innere Scharnierglied (3) drehbar durch vorbelastete Winkelgleitlager (11) auf dem Schwenkzapfen (10) getragen wird, um eine Schwenkbewegung relativ hierzu durchführen zu können.

5. Scharnier nach einem der Ansprüche 2 bis 4, bei welchem die drehbare Antriebswelle (16) drehbar in dem inneren Scharnierglied (3) so gelagert ist, daß sie sich im wesentlichen quer zur Längsachse des Schwenkzapfens (10) erstreckt, wobei eine Schnecke (18) von der Antriebswelle (16) benachbart zu einem freien Ende getragen wird, die in der Nähe des offenen Schwenkzapfenendes des inneren Scharniergliedes (3) liegt, um sich mit der Antriebswelle (16) zu drehen, und wobei ein Schneckenrad (19) mit der Schnecke (18) in Eingriff steht und das Schneckenrad (19) drehbar auf dem Schwenkzapfen (10) gelagert und mit zwei im Abstand zueinander angeordneten Antriebsstiften (21) versehen ist, die seitlich von dem Schneckenrad (19) im wesentlichen parallel zur Drehachse desselben vorstehen, um mit zwei entsprechenden Kreisbogenschlitzen (22) in einer Antriebshülse (23) in Eingriff zu gelangen, die fest auf dem Schwenkzapfen (10) sitzt, um eine Antriebskupplung zwischen dem Schneckenrad (19) und dem Schwenkzapfen (10) mit einem begrenzten Totgang zu bewirken, und wobei die Drehung der Antriebswelle (16) in der einen oder anderen Richtung eine Bewegung des äußeren Scharniergliedes (4) relativ zu dem inneren Scharnierglied (3) zwischen der Öffnungsstellung und der Schließstellung bewirkt.

6. Scharnier nach Anspruch 5, bei welchem der begrenzte Totgang etwa 90° beträgt.

7. Scharnier nach Anspruch 5 oder 6, bei welchem die Schnecke (18) eine eingängige Schnecke ist.

8. Scharnier nach einem der Ansprüche 5 bis 7, bei welchem der Antrieb einen Antriebsmotor aufweist, der mit jenem Ende der Antriebswelle (16) verbunden ist, das dem freien Ende gegenüberliegt.

9. Scharnier nach Anspruch 8, bei welchem der Antriebsmotor ein Elektromotor (25) ist, der im inneren Scharnierglied (3) angeordnet ist.

10. Scharnier nach einem der Ansprüche 1 bis 9, bei welchem die Mutter (8) axial entlang ihrer Längsachse beweglich ist, die in der Öffnungsstellung des Scharniers (1) koaxial zur Längsachse der Antriebswelle (16) und des Trapezgewindeabschnitts (7) liegt.

11. Scharnier nach Anspruch 10, bei welchem die Mutter axial beweglich in einem Ende einer Hülse (29) gelagert ist, mit der sie axial beweglich, jedoch drehfest über radial vorstehende Ansätze (30) am Mutterumfang verbunden ist, welche Ansätze in entsprechenden axial verlaufenden Schlitzen (31) der Wand der Hülse (29) gleiten, wobei das andere Ende der Hülse axial gleitbar auf einem Zapfen (32) gelagert ist, der fest mit dem äußeren Scharnierglied (4) verbunden ist.

12. Scharnier nach Anspruch 11, bei welchem eine erste Feder zwischen dem Zapfen (32) und der Hülse (29) vorgesehen ist, um die Hülse (29) axial vom Zapfen (32) weg vorzuspannen, und bei welchem eine zweite Feder zwischen dem anderen Ende der Hülse (29) und der Stirnfläche der Mutter (8) innerhalb der Hülse (29) vorgesehen ist, um die Mutter (8) axial von der Hülse (29) bis zu einem maximalen Ausmaß vorzuspannen, welches durch die mit den Hülsenschlitzen (31) zusammenwirkenden Mutter-Ansätzen (30) ermöglicht ist, wobei das Vorderende (7a) des Gewindespindelteils (7) der Antriebswelle so ausgebildet und dimensioniert ist, daß es das Vorderende (8b) der Mutter (8) während der Winkelschwenkbewegung des äußeren Scharniergliedes (4) berührt, die Mutter (8) nach hinten gegen die Vorspannkraft der zweiten Feder versetzt, bis der Gewindeabschnitt (7) und die Mutter (8) axial ausgerichtet sind, worauf die Vorspannkraft der zweiten Feder die Mutter (8) in Eingriff mit dem Spindelteil (7) bringt, um einen Gewindeeingriff bei fortgesetzter Drehung der Antriebswelle zu bewirken.

13. Scharnier nach einem der Ansprüche 1 bis 12, welches komplementäre Finger und Ausnehmungen auf den beiden Scharniergliedern (3, 4) aufweist, die in der Öffnungsstellung des Scharniers (1) in Eingriff gelangen, um die Starrheit und Querbelastungsfähigkeit des Scharniers in der Öffnungsstellung zu verbessern.

14. Scharnier nach Anspruch 13, bei welchem die komplementären Finger und Ausnehmungen wenigstens einen sich verjüngenden, im wesentlichen dreieckigen Finger (35) aufweisen, der auf dem einen Scharnier (4) angeordnet ist, während ein mit Ausnehmung versehener Aufnahmekörper (36) eine komplementäre, im wesentlichen dreieckige oder V-förmig gestaltete Ausnehmung (37) besitzt und auf dem anderen Scharnierglied (3) festgelegt ist.

15. Scharnier nach den Ansprüchen 13 oder 14, bei welchen die komplementären Finger und Ausnehmungen wenigstens einen mit einem im wesentlichen konischen Kopf versehenen Finger (38) aufweisen, der auf dem einen Scharnierglied (4) angeordnet ist und einen Aufnahmekörper (40), der eine komplementär gestaltete, im wesentlichen konische Ausnehmung besitzt, der auf dem anderen Scharnierglied (3) angeordnet ist.

16. Zusammenfaltbarer Träger oder Mast, der aus mehreren langgestreckten Abschnitten und wenigstens einem Scharnier (1) gemäß einem der Ansprüche 1 bis 15 besteht, wobei das Scharnier zwei benachbarte Abschnitte verbindet.

## Revendications

1. Charnière motorisée, pouvant être ouverte, fermée, bloquée et débloquée, comportant des moyens de pivotement (2), deux éléments de charnière (3,4) reliés à pivot par les moyens de pivotement (2) pour effectuer un mouvement angulaire relatif entre une position ouverte dans laquelle les éléments de charnière (3,4) s'étendent de façon sensiblement coaxiale en disposition bout à bout et une position fermée dans laquelle un élément de charnière (4) est déplacé, en faisant un angle avec l'autre élément de charnière (3), par rotation autour des moyens de pivotement (2) à partir de la disposition bout à bout, des moyens de verrouillage pouvant être bloqués et débloqués ayant une première partie mobile (7) portée par l'un (3) des éléments de charnière et une deuxième partie mobile coopérante (8) portée par l'autre élément de charnière (4), et des moyens de commande (9) entraînés par force motrice pouvant être actionnés sélectivement, pour ouvrir et bloquer les éléments de charnière (3,4) l'un par rapport à l'autre en faisant pivoter l'un (4) des éléments de charnière, à partir de la position fermée autour des moyens de pivotement (2), dans la disposition bout à bout sensiblement coaxiale de la position ouverte et en actionnant ensuite les parties (7,8) des moyens de verrouillage pour mettre en prise les éléments de charnière (3,4) et les bloquer, et pour débloquer et fermer les éléments de charnière (3,4) par déblocage et dégagement des parties (7,8) des moyens de verrouillage des éléments de charnière (3,4) bloqués en disposition bout à bout et, ensuite, par pivotement de l'un des éléments de charnière (3,4) autour des moyens de pivotement (2) suivant un mouvement angulaire par rapport à l'autre des éléments de charnière (3,4) depuis la disposition bout à bout jusque dans la position fermée, caractérisée en ce que les moyens de commande (9) comportent un arbre de commande tournant (16), la première partie mobile (7) des moyens de verrouillage est une partie de broche Acmé (7) à filetage extérieur fixée sur l'extrémité libre (16b) de l'arbre de commande (16) des moyens de commande et en saillie sur cette extrémité pour tourner avec elle, et dans laquelle la deuxième partie mobile (8) des moyens de verrouillage est un écrou Acmé conjugué (8) à filetage intérieur monté sur l'élément de charnière extérieur (4) sans possibilité de rotation mais en pouvant se déplacer en direction axiale.

2. Charnière selon la revendication 1, dans laquelle les moyens de pivotement (2) comportent un pivot (10) et dans laquelle chacun des éléments de charnière (3,4) est un profilé essentiellement allongé à section transversale en forme de U avec une âme de base (3a,4a) et deux ailes espacées (3b,4b), chaque aile (3b,4b) présentant dans son angle extérieur éloigné de l'âme de base (3a,4a) ou à proximité, une oreille de pivotement percée (3c,4c) pour recevoir le pivot (10), les éléments de charnière (3,4) ayant des dimensions telles que l'âme de base (3a) d'un élément de charnière intérieur (3) ait une largeur plus faible que l'âme de base (4a) de l'autre élément de charnière ou élément extérieur (4), de manière que l'élément de charnière intérieur (3) s'ajuste à l'intérieur de l'élément de charnière extérieur (4) suivant les oreilles de pivotement (3c,4c), le pivot (10) traversant les trous alignés des oreilles.

3. Charnière selon la revendication 2, dans laquelle l'élément de charnière extérieur (4) est lié solidairement au pivot (10) pour tourner avec lui.

4. Charnière selon la revendication 2 ou la revendication 3, dans laquelle l'élément de charnière intérieur (3) est porté pour tourner par des roulements à contact oblique préchargés (11) disposés sur le pivot (10) pour permettre un mouvement de rotation relatif par rapport à ce pivot.

5. Charnière, selon l'une quelconque des revendications 2 à 4, dans laquelle l'arbre de commande tournant (16) est monté à rotation dans l'élément de charnière intérieure (3) en s'étendant de façon essentiellement transversale à l'axe longitudinal du pivot (10), une vis sans fin (18) étant montée solidairement sur l'arbre de commande (16) au voisinage de son extrémité libre proche de l'extrémité de pivotement ouverte de l'élément charnière intérieur (3), pour tourner avec l'arbre de commande (16), une roue tangente de vis sans fin (19) engrenant avec la vis sans fin (18), cette roue tangente (19) étant montée à rotation sur le pivot (10) et étant munie de deux broches d'entraînement espacées (21) en saillie d'un côté de façon sensiblement parallèle à l'axe de rotation de la roue tangente (19) et s'engageant dans deux fentes incurvées correspondantes (22) d'une collerette d'entraînement (23) montée solidairement sur le pivot (10) pour constituer un accouplement d'entraînement entre la roue tangente (19) et le pivot (10) avec un degré limité de mouvement mort, la rotation de l'arbre de commande (16) dans un sens ou dans l'autre provoquant le mouvement de l'élément de charnière extérieur (4) par rapport à l'élément de charnière intérieur entre la position ouverte et la position fermée.

6. Charnière selon la revendication 5, dans laquelle le degré limité de mouvement mort est sensiblement égal à 90°.

7. Charnière selon la revendication 5 ou la revendication 6, dans laquelle la vis sans fin (18) est une vis à filet unique.

8. Charnière selon l'une quelconque des revendications 5 à 7, dans laquelle les moyens de commande comportent un moteur de commande relié à l'extrémité de l'arbre de commande (16) éloignée de l'extrémité libre.

9. Charnière selon la revendication 8, dans laquelle le moteur de commande est un moteur électrique (25) logé dans l'élément de charnière intérieur (3) et fixé sur cet élément.

10. Charnière selon l'une quelconque des revendications 1 à 9, dans laquelle l'écrou (8) est mobile en direction axiale suivant son axe longitudinal qui, dans la position ouverte de la charnière (1), est coaxial à l'axe longitudinal de l'arbre de commande (16) et de la partie de broche Acmé en saillie (7).

11. Charnière selon la revendication 10, dans laquelle l'écrou est monté mobile en direction axiale dans une extrémité d'un manchon (29) auquel il est relié pour effectuer un mouvement relatif en direction axiale mais sans possibilité de rotation au moyen de chevilles (30) en saillie radiale sur la surface extérieure de l'écrou, ces chevilles coulissant dans des fentes correspondantes (31) s'étendant en direction axiale à travers la paroi du manchon (29), l'autre extrémité du manchon étant montée pour coulisser en direction axiale sur un tourillon (32) monté fixe sur l'élément de charnière extérieur (4).

12. Charnière selon la revendication 11, dans laquelle un premier moyen à ressort est disposé entre le tourillon (32) et le manchon (29) pour pousser élastiquement le manchon (29) en direction axiale à l'écart du tourillon (32), et dans laquelle un deuxième moyen à ressort est disposé entre l'autre extrémité du manchon (29) et la face d'extrémité de l'écrou (8) située le plus à l'intérieur du manchon (29) pour pousser l'écrou (8) en direction axiale à l'écart du manchon (29) dans la mesure maximale permise par la coopération des chevilles (30) de l'écrou et les fentes (31) du manchon, l'extrémité de tête (7a) de la partie en saillie (7) de l'arbre de commande des moyens de commande étant formée et dimensionnée pour venir en contact avec l'extrémité de tête (8b) de l'écrou (8) pendant le mouvement de pivotement angulaire de l'élément de charnière extérieur (4), en déplaçant l'écrou vers l'arrière contre la force agissante du deuxième moyen à ressort jusqu'à ce que la partie en saillie (7) et l'écrou (8) soient alignés en direction axiale, la force agissante du deuxième moyen à ressort remettant ensuite l'écrou (8) en contact avec la partie en saillie (7) pour qu'elle s'y engage par vissage lorsque la rotation de l'arbre de commande des moyens de commande continue.

13. Charnière selon l'une quelconque des revendications 1 à 12, comportant des moyens complémentaires à téton et logement disposés sur les deux éléments de charnière (3,4) destinés à engrener dans la position ouverte de la charnière (1) pour accroître la rigidité et la capacité de chargement transversal de la charnière dans la positon ouverte.

14. Charnière selon la revendication 13, dans laquelle les moyens complémentaires à téton et logement comportent au moins un téton aminci sensiblement triangulaire en plan monté sur l'un (4) desdits éléments de charnière et un élément à logement (36) présentant un logement complémentaire (37) essentiellement triangulaire ou en forme de V, cet élément étant monté sur l'autre (3) desdits éléments de charnière.

15. Charnière selon la revendication 13 ou la revendication 14, dans laquelle les moyens complémentaires à téton et logement comportent au moins un téton (38) à tête essentiellement conique monté sur l'un (4) desdits éléments de charnière et un élément à logement (40) présentant un logement complémentaire de forme essentiellement conique monté sur l'autre (3) desdits éléments de charnière.

16. Flèche pliante ou mât pliant comportant une pluralité de tronçons allongés et au moins une charnière (1) selon l'une quelconque des revendications 1 à 15, la charnière ou chaque charnière (1) reliant deux tronçons contigus.
